(19) **Europäisches Patentamt / European Patent Office / Office européen des brevets**

(11) **EP 3 671 739 A1**

(12) # EUROPEAN PATENT APPLICATION

(43) Date of publication:
**24.06.2020 Bulletin 2020/26**

(51) Int Cl.:
*G10L 21/0308* (2013.01)   *G10L 25/30* (2013.01)
*G10L 25/60* (2013.01)

(21) Application number: **18215707.3**

(22) Date of filing: **21.12.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicants:
• **FRAUNHOFER-GESELLSCHAFT zur Förderung der angewandten Forschung e.V.**
  **80686 München (DE)**
• **Friedrich-Alexander-Universität Erlangen-Nürnberg**
  **91054 Erlangen (DE)**

(72) Inventors:
• **UHLE, Christian**
  **92289 Ursensollen (DE)**

• **TORCOLI, Matteo**
  **90419 Nürnberg (DE)**
• **DISCH, Sascha**
  **90766 Fürth (DE)**
• **PAULUS, Jouni**
  **90425 Nürnberg (DE)**
• **HERRE, Jürgen**
  **91054 Erlangen (DE)**
• **HELLMUTH, Oliver**
  **91054 Buckenhof (DE)**
• **FUCHS, Harald**
  **91341 Röttenbach (DE)**

(74) Representative: **Schairer, Oliver et al**
  **Schoppe, Zimmermann, Stöckeler Zinkler, Schenk & Partner mbB Patentanwälte**
  **Radlkoferstraße 2**
  **81373 München (DE)**

(54) **APPARATUS AND METHOD FOR SOURCE SEPARATION USING AN ESTIMATION AND CONTROL OF SOUND QUALITY**

(57)    An apparatus for generating a separated audio signal from an audio input signal is provided. The audio input signal comprises a target audio signal portion and a residual audio signal portion. The residual audio signal portion indicates a residual between the audio input signal and the target audio signal portion. The apparatus comprises a source separator (110), a determining module (120) and a signal processor (130). The source separator (110) is configured to determine an estimated target signal which depends on the audio input signal, the estimated target signal being an estimate of a signal that only comprises the target audio signal portion. The determining module (120) is configured to determine one or more result values depending on an estimated sound quality of the estimated target signal to obtain one or more parameter values, wherein the one or more parameter values are the one or more result values or depend on the one or more result values. The signal processor (130) is configured to generate the separated audio signal depending on the one or more parameter values and depending on at least one of the estimated target signal and the audio input signal and an estimated residual signal, the estimated residual signal being an estimate of a signal that only comprises the residual audio signal portion.

EP 3 671 739 A1

Fig. 1a

**Description**

The present invention relates to source separation of audio signals, in particular to signal adaptive control of sound quality of separated output signals, and, in particular, to an apparatus and a method for source separation using an estimation and control of sound quality.

In source separation, the quality of the output signals is degraded and this degradation increases monotonically with attenuation of the interfering signals.

Source separation of audio signals has been conducted in the past.

Source separation of audio signals aims at obtaining a target signal $s(n)$ given a mixture signal $x(n)$,

$$x(n) = s(n) + b(n) \quad (1)$$

where $b(n)$ comprises all interfering signals and is in the following referred to as "interfering signal". The output of the separation $h(\cdot)$ is an estimate of the target signal $\hat{s}_n$,

$$\hat{s}(n) = h(x(n)) \quad (2)$$

and possibly additionally an estimate of the interfering signal $\hat{b}_n$,

$$\hat{s}(n), \hat{b}(n) = h(x(n)) \quad (3)$$

Such processing typically introduces artifacts in the output signal that deteriorate the sound quality. This degradation of the sound quality is monotonically increasing with the amount of separation, the attenuation of the interfering signals. Many applications do not require a total separation but a partial enhancement, the interfering sounds are attenuated but still present in the output signal.

This has the additional benefit that the sound quality is higher than in fully separated signals, because less artifacts are introduced and leakage of the interfering signals partially mask the perceived artifacts.

Partially masking of an audio signal means that its loudness (e.g., its perceived intensity) is partially reduced. It can furthermore be desired and required that, rather than achieving a large attenuation, the sound quality of the output does not fall below a defined sound quality level.

An example for such application is dialog enhancement. The audio signals in TV and radio broadcast and movie sound are often mixtures of speech signals and background signals, e.g. environmental sounds and music. When these signals are mixed such that the level of the speech is too low compared to the level of the background, the listener may have difficulties to understand what has been said, or the understanding requires very high listening effort and this results in listener fatigue. Methods for automatically reducing the level of the background can be applied in such scenarios, but the result should be of high sound quality.

Various methods for source separation exist in the prior art. Separating a target signal from a mixture of signals has been discussed in the prior art. These methods can be categorized into two approaches. The first category of methods is based on formulated assumptions about the signal model and/or the mixing model. The signal model describes characteristics of the input signals, here $s(n)$ and $b(n)$. The mixing model describes characteristics of how the input signals are combined to yield the mixture signal $x(n)$, here by means of addition.

Based on these assumptions, a method is analytically or heuristically designed. For example, the method of Independent Component Analysis can be derived by assuming that the mixture comprises two source signals that are statistically independent, the mixture has been captured by two microphones, and the mixing has been derived by adding both signals (producing an instantaneous mixture). The inverse process of the mixing is then mathematically derived as inversion of the mixing matrix and the elements of this unmixing matrix are computed according to a specified method. Most analytically derived methods are derived by formulating the separation problem as a numerical optimization of a criterion, e.g. the mean squared error between the true target and the estimated target.

A second category is data driven. Here, a representation of the target signals is estimated, or a set of parameters for retrieving the target signals from the input mixture is estimated. The estimation is based on a model that has been trained on set of training data, hence the name "data driven". The estimation is derived by optimizing a criterion, e.g. by minimizing the mean squared error between the true target and the estimated target, given the training data. An example for this category are Artificial Neural Networks (ANN) that have been trained to output an estimate of a speech signal given a mixture of speech signal and a interfering signal. During the training, the adjustable parameters of the artificial neural network are determined such that a performance criterion computed for a set of training data is optimized - on average over the full data set.

Regarding source separation, a solution that is optimal in a mean squared error sense or optimal with respect to any other numerical criterion is not necessarily the solution with the highest sound quality that is preferred by human listeners.

A second problem stems from the fact that source separation always result in two effects, first the desired attenuation of the interfering sounds and second the undesired degradation of the sound quality. Both effects are correlated, e.g. increasing the desired effect results in an increase of the undesired effect. The ultimate aim is to control the trade-off between both.

Sound quality can be estimated, e.g., quantified by means of listening test or by means of computational models of sound quality. Sound quality has multiple aspects, in the following referred to as Sound Quality Components (SQCs).

For example, the sound quality is determined by the perceived intensity of artifacts (these are signal components that have been introduced by a signal processing, e.g. source separation, and that decrease the sound quality).

Or, for example, the sound quality is determined by the perceived intensity of interfering signals, or, e.g., by speech intelligibility (when the target signal is speech), or, for example, by the overall sound quality.

Various computational models of sound quality exist that compute (estimates of) Sound Quality Components $q_m$, $1 \leq m \leq M$, where $M$ denotes the number of Sound Quality Components.

Such methods typically estimate Sound Quality Component given the target signal and an estimate for the target signal,

$$ q_m = f\big(s(n), \hat{s}(n)\big) \quad (4) $$

or given also the interfering signal,

$$ q_m = f\big(s(n), b(n), \hat{s}(n)\big) \quad (5) $$

In practical applications, the target signals $s(n)$ (and the interfering signals $b(n)$) are not available, otherwise the separation would not be required. When only the input signal $x(n)$ and estimates of the target signal $\hat{s}(n)$ are available, the Sound Quality Components cannot be computed with these methods.

In the prior art, different computational models for estimating aspects of sound quality, including intelligibility, have been described.

Blind Source Separation Evaluation (BSSEval) (see [1]) is a multicriteria performance evaluation toolbox. The estimated signal is decomposed by an orthogonal projection into target signal component, interference from other sources, and artifacts. Metrics are computed as energy ratios of these components and expressed in dB. These are: Source to Distortion Ratio (SDR), Source to Interference Ratio (SIR), and Source to Artifact Ratio (SAR).

Perceptual Evaluation methods for Audio Source Separation (PEASS) (see [2]) was designed as a perceptually motivated successor of BSSEval. The signal projection is carried out on time segments and with a gammatone filterbank.

PEMO-Q (see [3]) is used to provide multiple features. Four perceptual scores are obtained from these features using a neural network trained with subjective ratings. The scores are: Overall Perceptual Score (OPS), Interference-related Perceptual Score (IPS), Artifact-related Perceptual Score (APS), and Target-related Perceptual Score (TPS).

Perceptual Evaluation of Audio Quality (PEAQ) (see [4]) is a metric designed for audio coding. It employs a peripheral ear model in order to calculate the basilar membrane representations of reference and test signal. Aspects of the difference between these representations are quantified by several output variables. By means of a neural network trained with subjective data, these variables are combined to give the main output, e.g., the Overall Difference Grade (ODG).

Perceptual Evaluation of Speech Quality (PESQ) (see [5]) is a metric designed for speech transmitted over telecommunication networks. Hence, the method comprises a preprocessing that mimics a telephone handset. Measures for audible disturbances are computed from the specific loudness of the signals and combined in PESQ scores. From them a MOS score is predicted by means of a polynomial mapping function (see [6]).

ViSQOLAudio (see [7]) is a metric designed for music encoded at low bitrates developed from Virtual Speech Quality Objective Listener (ViSQOL). Both metrics are based on a model of the peripheral auditory system to create internal representations of the signals called neurograms. These are compared via an adaptation of the structural similarity index, originally developed for evaluating the quality of compressed images.

Hearing-Aid Audio Quality Index (HAAQI) (see [8]) is an index designed to predict music quality for individuals listening through hearing aids. The index is based on a model of the auditory periphery, extended to include the effects of hearing loss. This is fitted to a database of quality ratings made by listeners having normal or impaired hearing. The hearing loss simulation can be bypassed and the index becomes valid also for normal-hearing people. Based on the same auditory model, the authors of HAAQI also proposed an index for speech quality, Hearing-Aid Speech Quality Index (HASQI) (see [9]) and an index for speech intelligibility, Hearing-Aid Speech Perception Index (HASPI) (see [10]).

Short-Time Objective Intelligibility (STOI) (see [11]) is a measure that is expected to have monotonic relation with the average speech intelligibility. It addresses especially speech processed by some type of time-frequency weighting.

In [12] an artificial neural network is trained so to estimate a Source to Distortion Ratio given only the input signal and the output estimated target signal, where the calculation of the Source to Distortion Ratio would normally take as inputs also the true target and the interfering signal. A pool of separation algorithms is run in parallel on the same input signal. The Source to Distortion Ratio estimates are used in order to select for each time frame the output from the algorithm with the best Source to Distortion Ratio. Hence, no control over the trade-off between sound quality and separation is formulated, and no control of the parameters of a separation algorithm is proposed. Moreover, the Source to Distortion Ratio is used, which is not perceptually-motivated and it was shown to poorly correlate with perceived quality, e.g. in [13].

Moreover, there are recent works on speech enhancement by supervised learning where Sound Quality Component estimates are integrated in the cost functions, while, traditionally, the speech enhancement models are optimized based on the mean square error (MSE) between estimated and clean speech. For example, in [14], [15], [16] cost functions based on STOI instead of the MSE are used. In [17] reinforcement learning based on PESQ or PEASS is used. Yet, no control over the trade-off between sound quality and separation is available.

In [18] an audio processing device is proposed where an audibility measure is used together with an artifact identification measure in order to control the time-frequency gains applied by the processing. This is to provide, e.g., that the amount of noise reduction is at a maximum level subject to the constraint that no artifact is introduced, the trade-off between sound quality and separation is fixed. Moreover, the system does not involve supervised learning. In order to identify artifacts, the Kurtosis Ratio is used, a measure that directly compares output and input signals (possibly in segments where speech is not present), without the need for the true target and the interfering signal. This simple measure is enriched by an audibility measure.

The object of the present invention is to provide improved concepts for source separation. The object of the present invention is solved by an apparatus according to claim 1, by a method according to claim 16 and by a computer program according to claim 17.

An apparatus for generating a separated audio signal from an audio input signal is provided. The audio input signal comprises a target audio signal portion and a residual audio signal portion. The residual audio signal portion indicates a residual between the audio input signal and the target audio signal portion. The apparatus comprises a source separator, a determining module and a signal processor. The source separator is configured to determine an estimated target signal which depends on the audio input signal, the estimated target signal being an estimate of a signal that only comprises the target audio signal portion. The determining module is configured to determine one or more result values depending on an estimated sound quality of the estimated target signal to obtain one or more parameter values, wherein the one or more parameter values are the one or more result values or depend on the one or more result values. The signal processor is configured to generate the separated audio signal depending on the one or more parameter values and depending on at least one of the estimated target signal and the audio input signal and an estimated residual signal, the estimated residual signal being an estimate of a signal that only comprises the residual audio signal portion. Moreover, a method for generating a separated audio signal from an audio input signal is provided. The audio input signal comprises a target audio signal portion and a residual audio signal portion. The residual audio signal portion indicates a residual between the audio input signal and the target audio signal portion. The method comprises:

- Determining an estimated target signal which depends on the audio input signal, the estimated target signal being an estimate of a signal that only comprises the target audio signal portion.

- Determining one or more result values depending on an estimated sound quality of the estimated target signal to obtain one or more parameter values, wherein the one or more parameter values are the one or more result values or depend on the one or more result values. And:

- Generating the separated audio signal depending on the one or more parameter values and depending on at least one of the estimated target signal and the audio input signal and an estimated residual signal, the estimated residual signal being an estimate of a signal that only comprises the residual audio signal portion.

Furthermore, a computer program for implementing the above-described method when being executed on a computer or signal processor is provided.

In the following, embodiments of the present invention are described in more detail with reference to the figures, in which:

Fig. 1a illustrates an apparatus for generating a separated audio signal from an audio input signal according to an embodiment,

Fig. 1b illustrates an apparatus for generating a separated audio signal according to another embodiment, further comprising an artificial neural network,

Fig. 2 illustrates an apparatus according to an embodiment which is configured to use an estimation of sound quality and which is configured to conduct post-processing,

Fig. 3 illustrates an apparatus according to another embodiment, wherein direct estimation of post-processing parameters is conducted,

Fig. 4 illustrates an apparatus according to a further embodiment, wherein estimation of sound quality and secondary separation is conducted, and

Fig. 5 illustrates an apparatus according to another embodiment, wherein direct estimation of separation parameters is conducted.

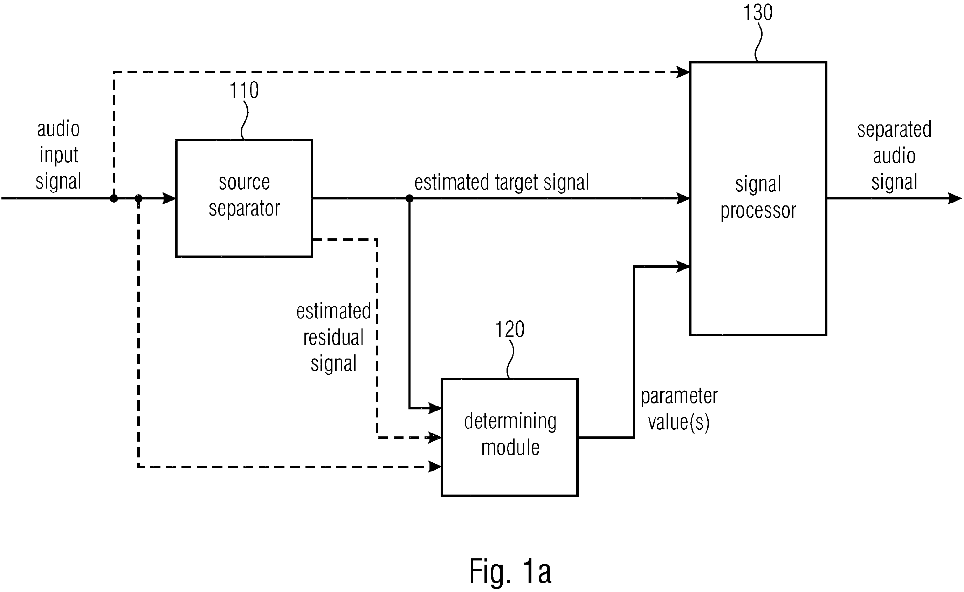

Fig. 1a illustrates an apparatus for generating a separated audio signal from an audio input signal according to an embodiment. The audio input signal comprises a target audio signal portion and a residual audio signal portion. The residual audio signal portion indicates a residual between the audio input signal and the target audio signal portion.

The apparatus comprises a source separator 110, a determining module 120 and a signal processor 130.

The source separator 110 is configured to determine an estimated target signal which depends on the audio input signal, the estimated target signal being an estimate of a signal that only comprises the target audio signal portion.

The determining module 120 is configured to determine one or more result values depending on an estimated sound quality of the estimated target signal to obtain one or more parameter values, wherein the one or more parameter values are the one or more result values or depend on the one or more result values.

The signal processor 130 is configured to generate the separated audio signal depending on the one or more parameter values and depending on at least one of the estimated target signal and the audio input signal and an estimated residual signal. The estimated residual signal is an estimate of a signal that only comprises the residual audio signal portion.

Optionally, in an embodiment, the determining module 120 may, e.g., be configured to determine the one or more result values depending on the estimated target signal and depending on at least one of the audio input signal and the estimated residual signal.

Embodiments provide a perceptually-motivated and signal-adaptive control over the trade-off between sound quality and separation using supervised learning. This can be achieved in two ways. The first method estimates the sound quality of the output signal and uses this estimate to adapt parameters of the separation or a post-processing of the separated signals. In a second embodiment, the regression method directly outputs the control parameters such that sound quality of the output signal meets predefined requirements.

According to embodiments, analysing the input signal and the output signal of the separation is conducted to yield an estimate of the sound quality $q_m$, and determining processing parameters based on $q_m$ such that the sound quality of the output (when using the determined processing parameters) is not lower than a defined quality value.

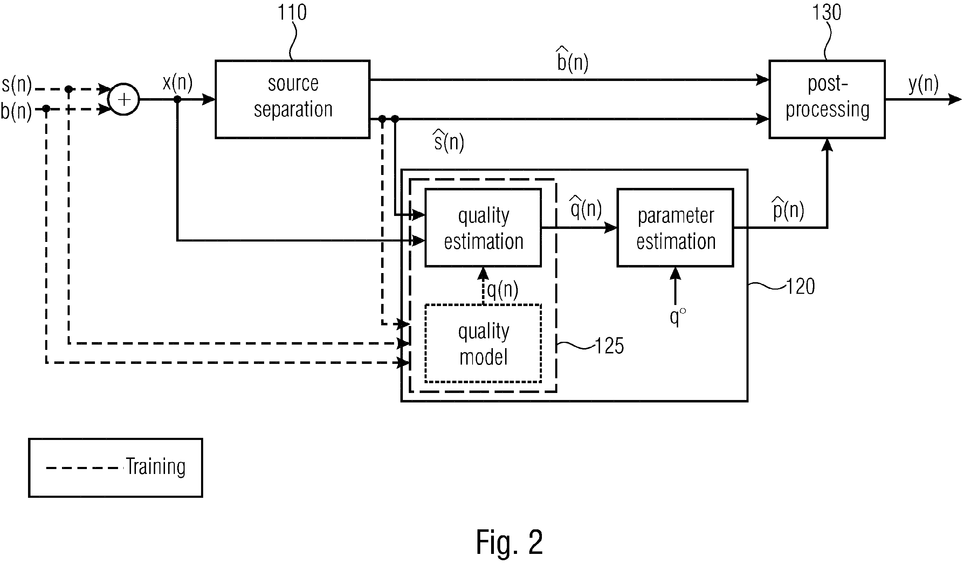

In some embodiments, the analysis outputs a quality measure $q_m$ in (9). From the quality measure, a control parameter $p1$ in formula (13) below is computed (e.g., a scaling factor), and the final output is obtained by mixing the initial output and the input as in formula (13) below. The computation $p1 = f(q_m)$ can be done iteratively or by means of regression, there the regression parameters are learned from a set of training signals, see Fig 2. In embodiments, instead of a scaling factor, the control parameter may, e.g., be a smoothing parameter or the like.

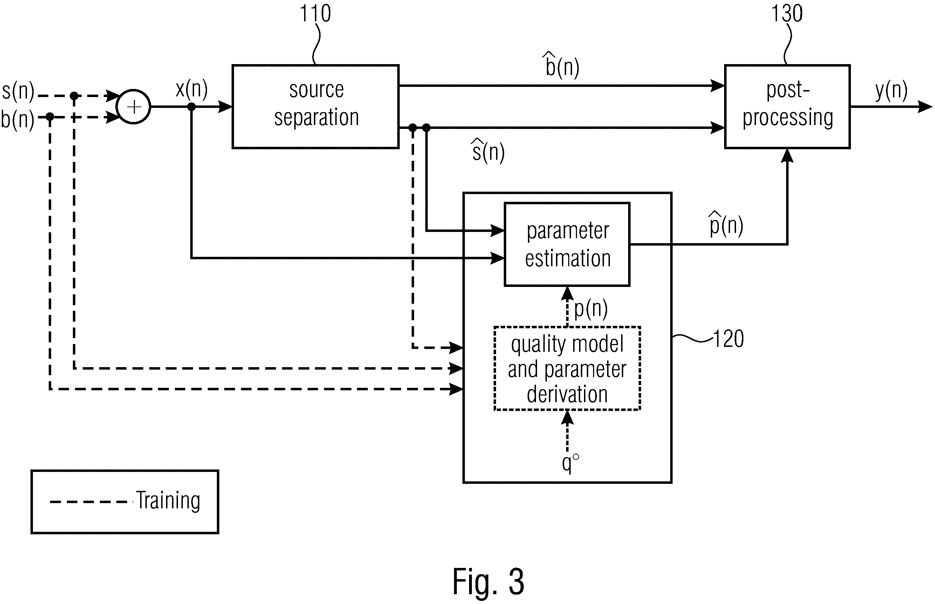

In some embodiments, the analysis yields the control parameter $p1$ in (13) directly, see Fig 3.

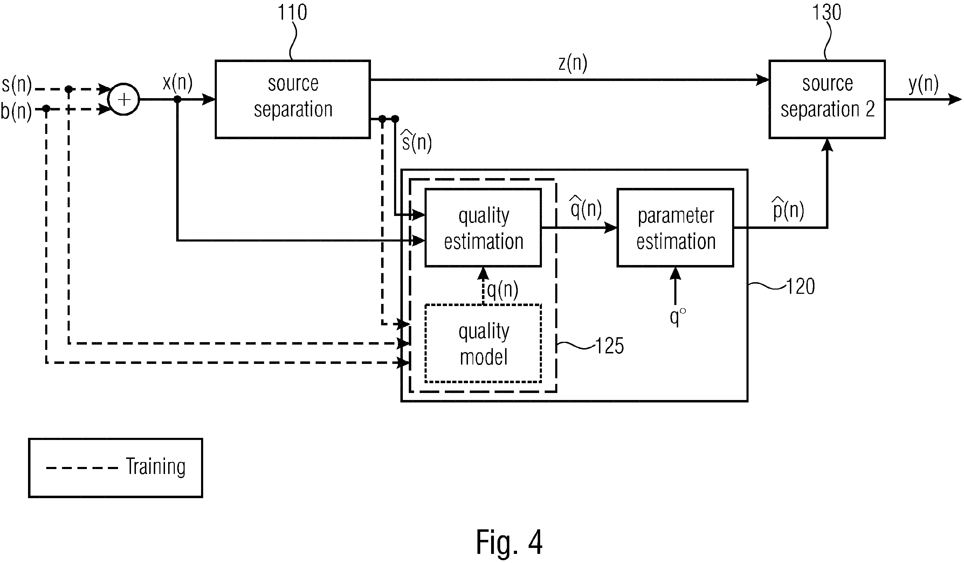

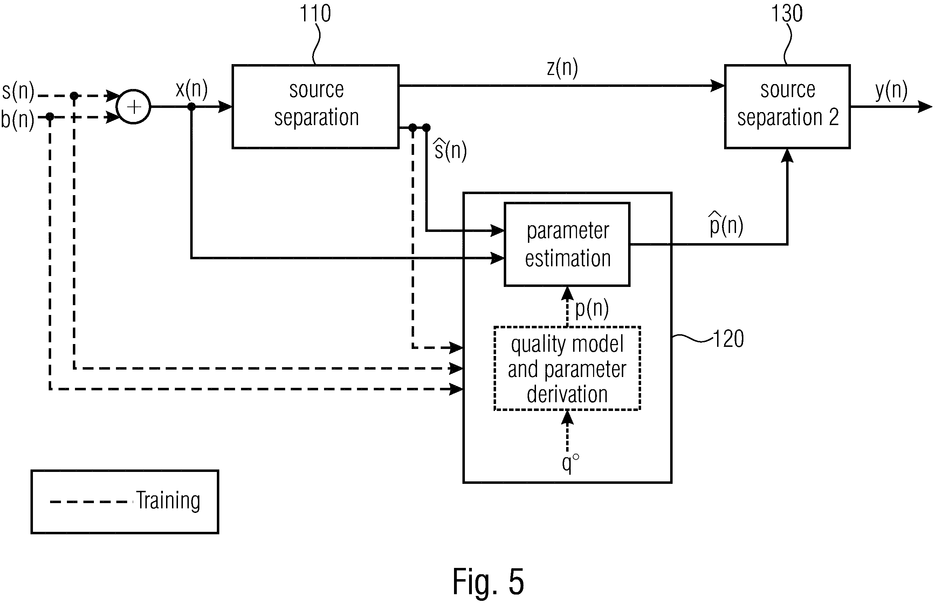

Fig 4 and Fig 5 define further embodiments.

Some embodiments achieve a control of sound quality in a post-processing step, as described below.

A subset of the herein described embodiments can be applied independently of the separation method. Some herein described embodiments control parameters of the separation process.

Source separation using spectral weighting processes signals in the time-frequency domain or a short-time spectral domain. The input signal $x(n)$ is transformed by means of the short-time Fourier transform (STFT) or processed by means of a filterbank, yielding complex-valued STFT coefficients or subband signals $X(m,k)$, where $m$ denotes the time frame index, $k$ denotes the frequency bin index or the subband index. The complex-valued STFT coefficients or subband signals of the desired signal are $S(m, k)$, and of the interfering signal are $B(m, k)$.

The separated output signals are computed by means of spectral weighting as

$$\hat{S}(m,k) = G(m,k)X(m,k) \quad (6)$$

where the spectral weights $G(m, k)$ are elementwise multiplied with the input signal. The aim is to attenuate elements in $X(m, k)$ where the interferer $B(m, k)$ is large. To this end, the spectral weights can be computed based on an estimate of the target $\hat{S}(m, k)$ or an estimate of the interferer $\hat{B}(m, k)$ or an estimate of the signal-to-interferer ratio, for example,

$$G(m,k) = \frac{\left(|\hat{X}(m,k)|^a - |\hat{B}(m,k)|^a\right)^c}{|X(m,k)|^a} \quad (7)$$

or

$$G(m,k) = \frac{|\hat{S}(m,k)|^c}{|X(m,k)|} \quad (8)$$

where a and c are parameters controlling the separation. For example, increasing $c$ can lead to larger attenuation of the interferer but also to larger degradation of the sound quality. The spectral weights can be further modified, e.g. by thresholding such that $G$ is larger than a threshold. The modified gains $G_m$ are computed as

$$G_m(m,k) = \begin{cases} G(m,k) & \text{if} \quad G(m,k) > v \\ v & \text{otherwise} \end{cases}$$

Increasing the threshold v reduces the attenuation of the interferer and reduces the potential degradation of the sound quality.

The estimation of the required quantities (target $\hat{S}(m, k)$ or interferer $\hat{B}(m, k)$ or signal-to-interferer ratio) is the core of these methods, and various estimation methods have been developed in the past. They follow either one of the two approaches described above.

The output signal $s(n)$ is then computed using the inverse processing of the STFT or filterbank.

In the following, source separation using an estimation of the target signal according to embodiments is described.

A representation of the target signal can also be estimated directly from the input signal, e.g. by means of an artificial neural network. Various methods have recently been proposed where an artificial neural network has been trained to estimate the target time signal, or its STFT coefficients, or the magnitudes of the STFT coefficients.

Regarding Sound Quality, a Sound Quality Component (SQC) is obtained by applying a supervised learning model $g(\cdot)$ to estimate the outputs of these computational model,

$$\hat{q}_m = g\big(x(n), \hat{s}(n)\big) \quad (9)$$

The supervised learning method $g(\cdot)$ is realized by:

1. Configuring a supervised learning model $g(\cdot)$ with trainable parameters, $N_i$ input variables and $N_o$ output variables,

2. Generating a data set with example signals for target $s(n)$ and mixture $x(n)$,

3. Computing estimates for the target signals by means of source separation, $\hat{s}_n = h(x(n))$,

4. Computing Sound Quality Components $q_m$ from the obtained signals by means of computational models of sound quality according to (9) or (10),

5. Training the supervised learning model $g(\cdot)$ such that it outputs estimates $\hat{q}_m$ given the corresponding example signals for estimated target $\hat{s}(n)$ (the output of the source separation) and mixture $x(n)$. Alternatively, training the supervised learning model $g(\cdot)$ such that it outputs estimates $\hat{q}_m$ given $\hat{s}(n)$ and $b(n)$ (if $x(n) = \hat{s}(n) + \hat{b}(n)$).

6. In the application, the trained model is fed with estimated target $\hat{s}(n)$ (the output of the source separation) obtained from the mixture $x(n)$ using the source separation method together with the mixture $x(n)$.

An application of supervised learning methods for quality control of the separated output signal is provided.

In the following, an estimation of the sound quality using supervised learning according to embodiments is described.

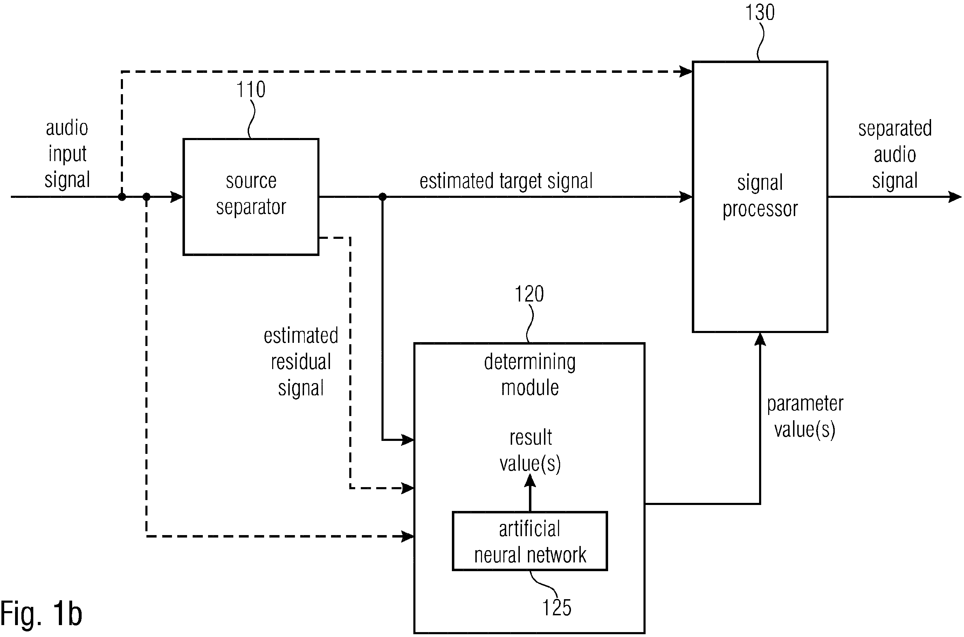

Fig. 1b illustrates an embodiment, where the determining module 120 comprises an artificial neural network 125. The artificial neural network 125 may, e.g., be configured to determine the one or more result values depending on the estimated target signal. The artificial neural network 125 may, e.g., be configured to receive a plurality of input values, each of the plurality of input values depending on at least one of the estimated target signal and the estimated residual signal and the audio input signal. The artificial neural network 125 may, e.g., be configured to determine the one or more result values as one or more output values of the artificial neural network 125.

Optionally, in an embodiment, the artificial neural network 125 may, e.g., be configured to determine the one or more result values depending on the estimated target signal and at least one of the audio input signal and the estimated residual signal.

In an embodiment, each of the plurality of input values may, e.g., depend on at least one of the estimated target signal and the estimated residual signal and the audio input signal. The one or more result values may, e.g., indicate the estimated sound quality of the estimated target signal.

According to an embodiment each of the plurality of input values may, e.g., depend on at least one of the estimated target signal and the estimated residual signal and the audio input signal. The one or more result values may, e.g., be the one or more parameter values.

In an embodiment, the artificial neural network 125 may, e.g., be configured to be trained by receiving a plurality of training sets, wherein each of the plurality of training sets comprises a plurality of input training values of the artificial neural network 125 and one or more output training values of the artificial neural network 125, wherein each of the plurality of output training values may, e.g., depend on at least one of a training target signal and a training residual signal and a training input signal, wherein each of the or more output training values may, e.g., depend on an estimation of a sound quality of the training target signal.

In embodiments, An estimate for Sound Quality Component is obtained by means of supervised learning using a supervised learning model (SLM), e.g. an Artificial Neural Network (ANN) 125. The Artificial Neural Network 125 can be for example a fully connected Artificial Neural Network 125 that comprises an input layer with A units, at least one hidden layer with input layers at least two units each, and an output layer with one or more units.

The supervised learning model can be implemented as a regression model or a classification model. A regression model estimates one the target value at the output of one unit in the output layer. Alternatively, the regression problem can be formulated as a classification problem by quantizing the outputs value into at least 3 steps and using an output layer with $C$ units where $C$ equals the number of quantization steps.

For each quantization step, one output unit is used.

The supervised learning model is first trained with a data set that contain multiple examples of mixture signal $x$, estimated target $\hat{s}$, and Sound Quality Component $q_m$, where the Sound Quality Component has been computed from the estimated target $\hat{s}$, and the true target $s$, for example. One item of the data set is denoted by $\{x_i, \hat{s}_i, q_i\}$. The output of the supervised learning model is here denoted by $q_i$.

The number of units in the input layer $A$ corresponds to the number of input values. The inputs to the models are computed from the input signals. Each signal can be optionally processed by means of the filterbank of time-frequency transform, e.g. a short-term Fourier transform (STFT). For example, the input can be constructed by concatenating the STFT coefficients computed from $D$ adjacent frames from $x_i$ and $\hat{s}_i$, where $D = 3$ or $D = 7$. With $B$ being the total number of spectral coefficients per frame, the total number of input coefficients is $2 \cdot B \cdot D$.

Each unit of the Artificial Neural Network 125 computes its output as a linear combination of the input values that are then optionally processed with a nonlinear compressive function,

$$u = h\left(\sum_i^K w_i v_i + o_i\right)$$

(10)

where $u$ denotes the output of a single neuron, $v_i$ denote the $K$ input values, $w_i$ denote the $K$ weights for the linear combination and $o_i$ denote $K$ additional bias terms. For the units in the first hidden layer, the number of input values $K$ equals the number of input coefficients D. All $w_i$ and $o_i$ are parameters of the Artificial Neural Network 125 that are determined in the training procedure.

The units of one layer are connected to the units of the following layer, the outputs of the units of a preceding layer are the inputs to the units of the next layer.

The training is carried out by minimizing the prediction error using a numerical optimization method, e.g. a gradient descent method. The prediction error for a single item is a function of the difference $e_i = f(q_i - \hat{q}_i)$. The prediction error over the full data set or a subset of the data set that is used an optimization criterion is for example the mean squared error MSE or the mean absolute error MAE, where $N$ denotes the number of items in the data set.

$$MSE = \frac{1}{N} \sum_i^N e_i^2$$

(11)

$$MAE = \frac{1}{N} \sum_i^N |e_i|$$

(12)

Other error metrics are feasible for the purpose of training if they are monotonic functions of $e_i$ and differentiable. Also, other structures and elements for constructing Artificial Neural Networks exist, e.g. Convolutional Neural Network layers or Recurrent Neural Network layers.

All have in common that they implement a mapping from a multidimensional input to a one- or multidimensional output where the mapping function is controlled by a set of parameters (e.g. $w_i$ and $o_i$) that are determined in a training procedure by optimizing a scalar criterion.

After the training, the supervised learning model can be used for the estimation of the sound quality of an unknown estimated target $\hat{s}$ given the mixture without the need for the true target $s$.

With respect to computational models of sound quality different computational models for estimating aspects of sound quality (including intelligibility) have been successfully used in experiments according to embodiments, such as the computational models described in [1] - [11], in particular, Blind Source Separation Evaluation (BSSEval) (see [1]), Perceptual Evaluation methods for Audio Source Separation (PEASS) (see [2]), PEMO-Q (see [3]), Perceptual Evaluation of Audio Quality (PEAQ) (see [4]), Perceptual Evaluation of Speech Quality (PESQ) (see [5] and [6]), ViSQOLAudio (see [7], Hearing-Aid Audio Quality Index (HAAQI) (see [8]), Hearing-Aid Speech Quality Index (HASQI) (see [9]), Hearing-Aid Speech Perception Index (HASPI) (see [10]), and Short-Time Objective Intelligibility (STOI) (see [11]).

Thus, according to an embodiment, the estimation of the sound quality of the training target signal may, e.g., depend on one or more computational models of sound quality.

For example, in an embodiment, the estimation of the sound quality of the training target signal may, e.g., depend on one or more of the following computational models of sound quality:

Blind Source Separation Evaluation,
Perceptual Evaluation methods for Audio Source Separation,
Perceptual Evaluation of Audio Quality,
Perceptual Evaluation of Speech Quality,
Virtual Speech Quality Objective Listener Audio,

Hearing-Aid Audio Quality Index,
Hearing-Aid Speech Quality Index,
Hearing-Aid Speech Perception Index, and
Short-Time Objective Intelligibility.

Other computational models of sound quality may, e.g., also be used in other embodiments.

In the following, control of sound quality is described.

The control of sound quality can be implemented by estimating the Sound Quality Component and computing processing parameters based on the Sound Quality Component estimate, or by directly estimating optimal processing parameters such that the Sound Quality Component meet a target value $q_0$ (or do not fall below that target).

The estimation of the Sound Quality Component has been described above. In a similar way the optimal processing parameters can be estimated by training the regression method with desired values for optimal processing parameters. The optimal processing parameters are computed as described below. This processing is referred to as Parameter Estimation Module (PEM) in the following.

The target value for the sound quality $q_0$ will determine the trade-off between separation and sound quality. This parameter can be controlled by the user, or it is specified dependent on the sound reproduction scenario. Sound reproduction at home in a quiet environment over high quality equipment may benefit from higher sound quality and lower separation. Sound reproduction in vehicles in a noisy environment over loudspeakers built into a smartphone may benefit from lower sound quality but higher separation and speech intelligibility.

Also, the estimated quantities (either Sound Quality Component or processing parameters) can be further applied to either control a post-processing or to control a secondary separation.

Consequently, four different concepts can be used for the implementation of the proposed method. These concepts are illustrated in Fig. 2, Fig. 3, Fig. 4 and Fig. 5 and are described in the following.

Fig. 2 illustrates an apparatus according to an embodiment which is configured to use an estimation of sound quality and which is configured to conduct post-processing.

According to such an embodiment the determining module 120 may, e.g., be configured to estimate, depending on at least one of the estimated target signal and the audio input signal and the estimated residual signal, a sound quality value as the one or more result values, wherein the sound quality value indicates the estimated sound quality of the estimated target signal. The determining module 120 may, e.g., be configured to determine the one or more parameter values depending on the sound quality value.

Thus, according to an embodiment the determining module 120 may e.g., be configured to determine, depending on the estimated sound quality of the estimated target signal, a control parameter as the one or more parameter value. The signal processor 130 may e.g., be configured to determine the separated audio signal depending on the control parameter and depending on at least one of the estimated target signal and the audio input signal and the estimated residual signal.

Particular embodiments, are described in the following:

In a first step, the separation is applied. The separated signal and the unprocessed signal are the inputs to a Quality Estimation Module (QEM). The QEM computes an estimate for Sound Quality Components, $\hat{q}(n)$.

The estimated Sound Quality Components $\hat{q}(n)$ are used to compute a set of parameters $\hat{p}(n)$ for controlling the post-processing.

The variables $q(n)$, $\hat{q}(n)$, $p(n)$, and $\hat{p}(n)$ can be time varying, but the time dependency is omitted in the following for the sake of a clear notation.

Such post-processing is, for example, adding a scaled or filtered copy of the input signal to a scaled or filtered copy of the output signal, and thereby reducing the attenuation of the interfering signals (e.g. the effect of the separation), e.g.

$$y(n) = p_1 \hat{s}(n) + (1 - p_1)x(n) \quad (13)$$

where the parameter $p_1$ controls the amount of separation.

In other embodiments, the formula:

$$y(n) = p_1\,\hat{s}(n) + (1 - p_1)\,\hat{b}(n)$$

may, e.g., be employed, wherein $\hat{b}$ is the estimated residual signal.

Reducing the separation results in

1) a reduced amount of artifacts and

2) increased leakage of the interfering sounds that masks the separation artifacts.

Thus, in an embodiment, the signal processor 130 may e.g., be configured to determine the separated audio signal depending on formula (13), wherein $y$ is the separated audio signal, wherein $\hat{s}$ is the estimated target signal, wherein $x$ is the audio input signal, wherein $p_1$ is the control parameter, and wherein $n$ is an index.

The parameter is computed given an estimate of the sound quality $\hat{q}$ and a target quality measure $q_0$,

$$\hat{p} = f(\hat{q}, q_0) \quad (14)$$

This function $f$ can be, for example, an iterative extensive search, as illustrated by the following pseudocode.

| **Algorithm** 1 Iterative extensive search of $\hat{p}$ | |
|---|---|
| 1: | $k \leftarrow 0$ |
| 2: | $p_k \leftarrow p_{init}$ |
| 3: | $\hat{q} \leftarrow QEM(x(n), \hat{s}(n))$ |
| 4: | $\nabla Q \leftarrow q_0 - \hat{q} -$ |
| 5: | **while** $|\nabla Q| > Q_{thr}$ AND $k < k_{max}$ **do** |
| 6: | $k \leftarrow k + 1$ |
| 7: | $p_k \leftarrow p_{k-1} - \gamma_k \nabla Q$ |
| 8: | $p_k \leftarrow min(1, max(0, p_k))$ |
| 9: | $y(n) \leftarrow p_k\hat{s}(n) + (1 - p_k)x(n)$ |
| 10: | $\hat{q} \leftarrow QEM(x(n), y(n))$ |
| 11: | $\nabla Q \leftarrow q_0 - \hat{q}$ |
| 12: | **end while** |
| 13: | $\hat{p} \leftarrow p_k$ |

Alternatively, the relationship $\hat{p} = f(\hat{q})$ can be computed for by

1. Computing $\hat{q}_k$ for a set of values $p_k$, $k = 1... K$

2. Computing the remaining values of $\hat{q}$ by interpolation and extrapolation.

For example, when the processing parameter $p$ is controlling a post-processing as in Equation (13), $\hat{q}$ is computed for a fixed number of values of $p_1$, e.g. corresponding to 18, 12, and 6 dB of relative amplification of $\hat{s}$.

Hence, the mapping $\hat{p} = f(\hat{q})$ is approximated and $\hat{p} = f(q_0)$ can be selected.

Summarizing, in an embodiment, the signal processor 130 may, e.g., be configured to generate the separated audio signal by determining a first version of the separated audio signal and by modifying the separated audio signal one or more times to obtain one or more intermediate versions of the separated audio signal. The determining module 120 may, e.g., be configured to modify the sound quality value depending on one of the one or more intermediate values of the separated audio signal. The signal processor 130 may, e.g., be configured to stop modifying the separated audio signal, if sound quality value is greater than or equal to a defined quality value.

Fig. 3 illustrates an apparatus according to another embodiment, wherein direct estimation of post-processing parameters is conducted.

First the separation is applied. The separated signals are the input to a Parameter Estimation Module (PEM). The estimated parameters are applied for controlling the post-processing. The PEM has been trained to directly estimate p(n) from the separated signal $\hat{s}(n)$ and the input signal $x(n)$. This means that the operation in Eq. 14 is moved to the training phase and the regression method is trained to estimate $\hat{p}$ instead of $\hat{q}$. Hence, the following function is learned.

$$\hat{p} = z(x(n), \hat{s}(n)) \quad (15)$$

It is apparent that this procedure has the advantage of requiring less computations as opposed to the procedure described above. This comes at the cost of having less flexibility, since the model is trained for a fixed setting of $q_0$. However, several models can be trained on different values of $q_0$. In such a way, the final flexibility on the choice of $q_0$ can be retained.

In an embodiment, the signal processor 130 may, e.g., be configured to generate the separated audio signal depending on the one or more parameter values and depending on a postprocessing of the estimated target signal.

Fig. 4 illustrates an apparatus according to a further embodiment, wherein estimation of sound quality and secondary separation is conducted.

First the separation is applied. The separated signals are the input to a QEM. The estimated Sound Quality Components are used to compute a set of parameters for controlling secondary separation. The input to the secondary separation $z(n)$ is either the input signal $x(n)$ or the output of the first separation $\hat{s}(n)$, a linear combination of both $z(n) = a\,x(n) + b\,\hat{s}(n)$ where $a$ and $b$ are weighting parameters or an intermediate result from the first separation.

Thus, in such an embodiment, the signal processor 130 may, for example, be configured to generate the separated audio signal depending on the one or more parameter values and depending on a linear combination of the estimated target signal and the audio input signal, or the signal processor 130 may, e.g., be configured to generate the separated audio signal depending on the one or more parameter values and depending on a linear combination of the estimated target signal and the estimated residual signal.

Suitable parameters for controlling the secondary separation are, for example, parameters that modify the spectral weights.

Fig. 5 illustrates an apparatus according to another embodiment, wherein direct estimation of separation parameters is conducted.

First the separation is applied. The separated signals are the input to a PEM. The estimated parameters control the secondary separation.

The input to the secondary separation z(n) is either the input signal x(n) or the output of the first separation $\hat{s}(n)$, a linear combination of both $z(n) = a\,x(n) + b\,\hat{s}(n)$ where $a$ and $b$ are weighting parameters or an intermediate result from the first separation.

For instance, the following parameters are controlled: $a$, and $c$ from Equations (5), (6) and $v$ as described above.

Regarding iterative processing according to embodiments, Fig 4 and 5 depicts an iterative processing with one iteration. In general, this can be repeated multiple times, and implemented in a loop.

The iterative processing (without quality estimation in between) is very similar to other prior methods that concatenate multiple separations.

Such an approach may, e.g., be suitable for combining multiple different methods (which is better than repeating one method).

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus. Some or all of the method steps may be executed by (or using) a hardware apparatus, like for example, a microprocessor, a programmable computer or an electronic circuit. In some embodiments, one or more of the most important method steps may be executed by such an apparatus.

Depending on certain implementation requirements, embodiments of the invention can be implemented in hardware or in software or at least partially in hardware or at least partially in software. The implementation can be performed using a digital storage medium, for example a floppy disk, a DVD, a Blu-Ray, a CD, a ROM, a PROM, an EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may for example be stored on a machine readable carrier.

Other embodiments comprise the computer program for performing one of the methods described herein, stored on a machine readable carrier.

In other words, an embodiment of the inventive method is, therefore, a computer program having a program code for performing one of the methods described herein, when the computer program runs on a computer.

A further embodiment of the inventive methods is, therefore, a data carrier (or a digital storage medium, or a computer-readable medium) comprising, recorded thereon, the computer program for performing one of the methods described herein. The data carrier, the digital storage medium or the recorded medium are typically tangible and/or non-transitory.

A further embodiment of the inventive method is, therefore, a data stream or a sequence of signals representing the computer program for performing one of the methods described herein. The data stream or the sequence of signals may for example be configured to be transferred via a data communication connection, for example via the Internet.

A further embodiment comprises a processing means, for example a computer, or a programmable logic device, configured to or adapted to perform one of the methods described herein.

A further embodiment comprises a computer having installed thereon the computer program for performing one of the methods described herein.

A further embodiment according to the invention comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

The apparatus described herein may be implemented using a hardware apparatus, or using a computer, or using a combination of a hardware apparatus and a computer.

The methods described herein may be performed using a hardware apparatus, or using a computer, or using a combination of a hardware apparatus and a computer.

The above described embodiments are merely illustrative for the principles of the present invention. It is understood that modifications and variations of the arrangements and the details described herein will be apparent to others skilled in the art. It is the intent, therefore, to be limited only by the scope of the impending patent claims and not by the specific details presented by way of description and explanation of the embodiments herein.

References:

[1] E. Vincent, R. Gribonval, and C. Fevotte, "Performance measurement in blind audio source separation," IEEE Transactions on Audio, Speech and Language Processing, vol. 14, no. 4, pp. 1462-1469, 2006.

[2] V. Emiya, E. Vincent, N. Harlander, and V. Hohmann, "Subjective and objective quality assessment of audio source separation," IEEE Trans. Audio, Speech and Language Process., vol. 19, no. 7, 2011.

[3] R. Huber and B. Kollmeier, "PEMO-Q - a new method for objective audio quality assessment using a model of audatory perception," IEEE Trans. Audio, Speech and Language Process., vol. 14, 2006.

[4] ITU-R Rec. BS.1387-1, "Method for objective measurements of perceived audio quality," 2001.

[5] ITU-T Rec. P.862, "Perceptual evaluation of speech quality (PESQ): An objective method for end-to-end speech quality assessment of narrow-band telephone networks and speech codecs," 2001.

[6] ITU-T Rec. P.862.1, "Mapping function for transforming P.862 raw results scores to MOS-LQO," 2003.

[7] A. Hines, E. Gillen et al., "ViSQOLAudio: An Objective Audio Quality Metric for Low Bitrate Codecs," J. Acoust. Soc. Am., vol. 137, no. 6, 2015.

[8] J. M. Kates and K. H. Arehart, "The Hearing-Aid Audio Quality Index (HAAQI)," IEEE Trans. Audio, Speech and Language Process., vol. 24, no. 2, 2016, evaluation code kindly provided by Prof. J.M. Kates.

[9] J. M. Kates and K. H. Arehart, "The Hearing-Aid Speech Quality Index (HASQI) version 2," Journal of the Audio Engineering Society, vol. 62, no. 3, pp. 99-117, 2014.

[10] J. M. Kates and K. H. Arehart, "The Hearing-Aid Speech Perception Index (HASPI)," Speech Communication, vol. 65, pp. 75-93, 2014.

[11] C. Taal, R. Hendriks, R. Heusdens, and J. Jensen, "An algorithm for intelligibility prediction of time-frequency weighted noisy speech," IEEE Trans. Audio, Speech and Language Process., vol. 19, no. 7, 2011.

[12] E. Manilow, P. Seetharaman, F. Pishdadian, and B. Pardo, "Predicting algorithm efficacy for adaptive multi-cue source separation," in Applications of Signal Processing to Audio and Acoustics (WASPAA), 2017 IEEE Workshop on, 2017, pp. 274-278.

[13] M. Cartwright, B. Pardo, G. J. Mysore, and M. Hoffman, "Fast and easy crowdsourced perceptual audio evaluation," in Acoustics, Speech and Signal Processing (ICASSP), 2016 IEEE International Conference on, 2016.

[14] S.-W. Fu, T.-W. Wang, Y. Tsao, X. Lu, and H. Kawai, "End-to-end waveform utterance enhancement for direct evaluation metrics optimization by fully convolutional neural networks," IEEE/ACM Transactions on Audio, Speech and Language Processing (TASLP), vol. 26, no. 9, 2018.

[15] Y. Koizumi, K. Niwa, Y. Hioka, K. Koabayashi, and Y. Haneda, "Dnn-based source enhancement to increase objective sound quality assessment score," IEEE/ACM Transactions on Audio, Speech, and Language Processing, 2018.

[16] Y. Zhao, B. Xu, R. Giri, and T. Zhang, "Perceptually guided speech enhancement using deep neural networks," in Acoustics, Speech and Signal Processing (ICASSP), 2018 IEEE International Conference on, 2018.

[17] Y. Koizumi, K. Niwa, Y. Hioka, K. Kobayashi, and Y. Haneda, "Dnn-based source enhancement self-optimized by reinforcement learning using sound quality measurements," in Acoustics, Speech and Signal Processing (ICASSP), 2017 IEEE International Conference on, 2017.

[18] J. Jensen and M. S. Pedersen, "Audio processing device comprising artifact reduction," US Patent US 9,432,766 B2, Aug. 30, 2016.

**Claims**

1. An apparatus for generating a separated audio signal from an audio input signal, wherein the audio input signal comprises a target audio signal portion and a residual audio signal portion, wherein the residual audio signal portion indicates a residual between the audio input signal and the target audio signal portion, wherein the apparatus comprises:

   a source separator (110) for determining an estimated target signal which depends on the audio input signal, the estimated target signal being an estimate of a signal that only comprises the target audio signal portion,
   a determining module (120), wherein the determining module (120) is configured to determine one or more result values depending on an estimated sound quality of the estimated target signal to obtain one or more parameter values, wherein the one or more parameter values are the one or more result values or depend on the one or more result values, and
   a signal processor (130) for generating the separated audio signal depending on the one or more parameter values and depending on at least one of the estimated target signal and the audio input signal and an estimated residual signal, the estimated residual signal being an estimate of a signal that only comprises the residual audio signal portion.

2. An apparatus according to claim 1,
   wherein the determining module (120) is configured to determine, depending on the estimated sound quality of the estimated target signal, a control parameter as the one or more parameter values, and
   wherein the signal processor is configured to determine the separated audio signal depending on the control parameter and depending on at least one of the estimated target signal and the audio input signal and the estimated residual signal.

3. An apparatus according to claim 2,
   wherein the signal processor (130) is configured to determine the separated audio signal depending on:

$$y(n) = p_1\, \hat{s}(n) + (1 - p_1)\, x(n) \, ,$$

or depending on:

$$y(n) = p_1\,\hat{s}(n) + (1 - p_1)\,\hat{b}(n)\,,$$

wherein $y$ is the separated audio signal,
wherein $\hat{s}$ is the estimated target signal,
wherein $x$ is the audio input signal,
wherein $\hat{b}$ is the estimated residual signal,
wherein $p_1$ is the control parameter, and
wherein $n$ is an index.

4.  An apparatus according to claim 2 or 3,
    wherein the determining module (120) is configured to estimate, depending on at least one of the estimated target signal and the audio input signal and the estimated residual signal, a sound quality value as the one or more result values, wherein the sound quality value indicates the estimated sound quality of the estimated target signal, and wherein the determining module (120) is configured to determine the one or more parameter values depending on the sound quality value.

5.  An apparatus according to claim 4,
    wherein the signal processor (130) is configured to generate the separated audio signal by determining a first version of the separated audio signal and by modifying the separated audio signal one or more times to obtain one or more intermediate versions of the separated audio signal,
    wherein the determining module (120) is configured to modify the sound quality value depending on one of the one or more intermediate values of the separated audio signal, and
    wherein the signal processor (130) is configured to stop modifying the separated audio signal, if sound quality value is greater than or equal to a defined quality value.

6.  An apparatus according to one of the preceding claims,
    wherein the determining module (120) is configured to determine the one or more result values depending on the estimated target signal and depending on at least one of the audio input signal and the estimated residual signal.

7.  An apparatus according to one of the preceding claims,
    wherein the determining module (120) comprises an artificial neural network (125) for determining the one or more result values depending on the estimated target signal, wherein the artificial neural network (125) is configured to receive a plurality of input values, each of the plurality of input values depending on at least one of the estimated target signal and the estimated residual signal and the audio input signal, and wherein the artificial neural network (125) is configured to determine the one or more result values as one or more output values of the artificial neural network (125).

8.  An apparatus according to claim 7,
    wherein each of the plurality of input values depends on at least one of the estimated target signal and the estimated residual signal and the audio input signal, and
    wherein the one or more result values indicate the estimated sound quality of the estimated target signal.

9.  An apparatus according to claim 7,
    wherein each of the plurality of input values depends on at least one of the estimated target signal and the estimated residual signal and the audio input signal, and
    wherein the one or more result values are the one or more parameter values.

10. An apparatus according to one of claims 7 to 9,
    wherein the artificial neural network (125) is configured to be trained by receiving a plurality of training sets, wherein each of the plurality of training sets comprises a plurality of input training values of the artificial neural network (125) and one or more output training values of the artificial neural network (125), wherein each of the plurality of output training values depends on at least one of a training target signal and a training residual signal and a training input signal, wherein each of the or more output training values depends on an estimation of a sound quality of the training target signal.

**11.** An apparatus according to claim 10,
wherein the estimation of the sound quality of the training target signal depends on one or more computational models of sound quality.

**12.** An apparatus according to claim 11,
wherein the one or more computational models of sound quality are at least one of:

Blind Source Separation Evaluation,
Perceptual Evaluation methods for Audio Source Separation,
Perceptual Evaluation of Audio Quality,
Perceptual Evaluation of Speech Quality,
Virtual Speech Quality Objective Listener Audio,
Hearing-Aid Audio Quality Index,
Hearing-Aid Speech Quality Index,
Hearing-Aid Speech Perception Index, and
Short-Time Objective Intelligibility.

**13.** An apparatus according to one of claims 7 to 12,
wherein the artificial neural network (125) is configured to determine the one or more result values depending on the estimated target signal and depending on at least one of the audio input signal and the estimated residual signal.

**14.** An apparatus according to one of the preceding claims,
wherein the signal processor (130) is configured to generate the separated audio signal depending on the one or more parameter values and depending on a postprocessing of the estimated target signal.

**15.** An apparatus according to one of the preceding claims,
wherein the signal processor (130) is configured to generate the separated audio signal depending on the one or more parameter values and depending on a linear combination of the estimated target signal and the audio input signal, or
wherein the signal processor (130) is configured to generate the separated audio signal depending on the one or more parameter values and depending on a linear combination of the estimated target signal and the estimated residual signal.

**16.** A method for generating a separated audio signal from an audio input signal, wherein the audio input signal comprises a target audio signal portion and a residual audio signal portion, wherein the residual audio signal portion indicates a residual between the audio input signal and the target audio signal portion, wherein the method comprises:

determining an estimated target signal which depends on the audio input signal, the estimated target signal being an estimate of a signal that only comprises the target audio signal portion,
determining one or more result values depending on an estimated sound quality of the estimated target signal to obtain one or more parameter values, wherein the one or more parameter values are the one or more result values or depend on the one or more result values, and
generating the separated audio signal depending on the one or more parameter values and depending on at least one of the estimated target signal and the audio input signal and an estimated residual signal, the estimated residual signal being an estimate of a signal that only comprises the residual audio signal portion.

**17.** A computer program for implementing the method of claim 16 when being executed on a computer or signal processor.

Fig. 1a

Fig. 1b

EP 3 671 739 A1

Fig. 2

Fig. 3

Fig. 4

EP 3 671 739 A1

Fig. 5

Europäisches
Patentamt

European
Patent Office

Office européen
des brevets

# EUROPEAN SEARCH REPORT

**Application Number**

EP 18 21 5707

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/251320 A1 (JEONG YOUNG HO [KR] ET AL) 31 August 2017 (2017-08-31)<br><br>* figures 1,2 *<br>* paragraphs [0043] - [0045] *<br>* paragraphs [0058] - [0062] *<br>----- | 1,2, 4-14,16, 17 | INV.<br>G10L21/0308<br><br>ADD.<br>G10L25/30<br>G10L25/60 |
| A | WO 2016/033269 A1 (ANALOG DEVICES INC [US]) 3 March 2016 (2016-03-03)<br>* paragraphs [0098], [0108] *<br>----- | 1-17 | |
| A | US 2007/021958 A1 (VISSER ERIK [US] ET AL) 25 January 2007 (2007-01-25)<br>* paragraphs [0022], [0067], [0085] *<br>----- | 1-17 | |
| A | GB 2 516 483 A (CANON KK [JP]; CENTRE NAT RECH SCIENT [FR] ET AL.) 28 January 2015 (2015-01-28)<br>* page 7, lines 1-8 *<br>----- | 1-17 | |

**TECHNICAL FIELDS SEARCHED (IPC)**

G10L

The present search report has been drawn up for all claims

| Place of search | Date of completion of the search | Examiner |
|---|---|---|
| Munich | 2 May 2019 | Ramos Sánchez, U |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 18 21 5707

This annex lists the patent family members relating to the patent documents cited in the above-mentioned European search report.
The members are as contained in the European Patent Office EDP file on
The European Patent Office is in no way liable for these particulars which are merely given for the purpose of information.

02-05-2019

| Patent document cited in search report | | Publication date | Patent family member(s) | | Publication date |
|---|---|---|---|---|---|
| US 2017251320 | A1 | 31-08-2017 | KR<br>US | 20170101629 A<br>2017251320 A1 | 06-09-2017<br>31-08-2017 |
| WO 2016033269 | A1 | 03-03-2016 | US<br>WO | 2017243577 A1<br>2016033269 A1 | 24-08-2017<br>03-03-2016 |
| US 2007021958 | A1 | 25-01-2007 | CN<br>EP<br>JP<br>KR<br>US<br>WO | 101278337 A<br>1908059 A2<br>2009503568 A<br>20080059147 A<br>2007021958 A1<br>2007014136 A2 | 01-10-2008<br>09-04-2008<br>29-01-2009<br>26-06-2008<br>25-01-2007<br>01-02-2007 |
| GB 2516483 | A | 28-01-2015 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 9432766 B2

**Non-patent literature cited in the description**

- **E. VINCENT ; R. GRIBONVAL ; C. FEVOTTE.** Performance measurement in blind audio source separation. *IEEE Transactions on Audio, Speech and Language Processing,* 2006, vol. 14 (4), 1462-1469
- **V. EMIYA ; E. VINCENT ; N. HARLANDER ; V. HOHMANN.** Subjective and objective quality assessment of audio source separation. *IEEE Trans. Audio, Speech and Language Process,* 2011, vol. 19 (7
- **R. HUBER ; B. KOLLMEIER.** PEMO-Q - a new method for objective audio quality assessment using a model of audatory perception. *IEEE Trans. Audio, Speech and Language Process,* 2006, vol. 14
- Method for objective measurements of perceived audio quality. *ITU-R Rec. BS.1387-1,* 2001
- Perceptual evaluation of speech quality (PESQ): An objective method for end-to-end speech quality assessment of narrow-band telephone networks and speech codecs. *ITU-T Rec. P.862,* 2001
- Mapping function for transforming P.862 raw results scores to MOS-LQO. *ITU-T Rec. P.862.1,* 2003
- **A. HINES ; E. GILLEN et al.** ViSQOLAudio: An Objective Audio Quality Metric for Low Bitrate Codecs. *J. Acoust. Soc. Am.,* 2015, vol. 137 (6
- **J. M. KATES ; K. H. AREHART.** The Hearing-Aid Audio Quality Index (HAAQI). *IEEE Trans. Audio, Speech and Language Process,* 2016, vol. 24 (2
- **J. M. KATES ; K. H. AREHART.** The Hearing-Aid Speech Quality Index (HASQI) version 2. *Journal of the Audio Engineering Society,* 2014, vol. 62 (3), 99-117
- **J. M. KATES ; K. H. AREHART.** The Hearing-Aid Speech Perception Index (HASPI). *Speech Communication,* 2014, vol. 65, 75-93
- **C. TAAL ; R. HENDRIKS ; R. HEUSDENS ; J. JENSEN.** An algorithm for intelligibility prediction of time-frequency weighted noisy speech. *IEEE Trans. Audio, Speech and Language Process,* 2011, vol. 19 (7
- **E. MANILOW ; P. SEETHARAMAN ; F. PISHDADIAN ; B. PARDO.** Predicting algorithm efficacy for adaptive multi-cue source separation. *Applications of Signal Processing to Audio and Acoustics (WASPAA), 2017 IEEE Workshop on,* 2017, 274-278
- **M. CARTWRIGHT ; B. PARDO ; G. J. MYSORE ; M. HOFFMAN.** Fast and easy crowdsourced perceptual audio evaluation. *Acoustics, Speech and Signal Processing (ICASSP), 2016 IEEE International Conference on,* 2016
- **S.-W. FU ; T.-W. WANG ; Y. TSAO ; X. LU ; H. KAWAI.** End-to-end waveform utterance enhancement for direct evaluation metrics optimization by fully convolutional neural networks. *IEEE/ACM Transactions on Audio, Speech and Language Processing (TASLP),* 2018, vol. 26 (9
- **Y. KOIZUMI ; K. NIWA ; Y. HIOKA ; K. KOABAYASHI ; Y. HANEDA.** Dnn-based source enhancement to increase objective sound quality assessment score. *IEEE/ACM Transactions on Audio, Speech, and Language Processing,* 2018
- **Y. ZHAO ; B. XU ; R. GIRI ; T. ZHANG.** Perceptually guided speech enhancement using deep neural networks. *Acoustics, Speech and Signal Processing (ICASSP), 2018 IEEE International Conference on,* 2018
- **Y. KOIZUMI ; K. NIWA ; Y. HIOKA ; K. KOBAYASHI ; Y. HANEDA.** Dnn-based source enhancement self-optimized by reinforcement learning using sound quality measurements. *Acoustics, Speech and Signal Processing (ICASSP), 2017 IEEE International Conference on,* 2017